(19) Europäisches Patentamt / European Patent Office / Office européen des brevets

(11) **EP 3 245 427 B1**

(12) **FASCICULE DE BREVET EUROPEEN**

(45) Date de publication et mention de la délivrance du brevet:
**07.11.2018 Bulletin 2018/45**

(21) Numéro de dépôt: **16703339.8**

(22) Date de dépôt: **12.01.2016**

(51) Int Cl.:
*F16H 57/023* (2012.01)        *B64C 27/14* (2006.01)
*F02C 7/36* (2006.01)

(86) Numéro de dépôt international:
**PCT/FR2016/050046**

(87) Numéro de publication internationale:
**WO 2016/113494 (21.07.2016 Gazette 2016/29)**

(54) **PROCÉDÉ DE FABRICATION D'UN RÉDUCTEUR D'HÉLICE**

VERFAHREN ZUR HERSTELLUNG EINES PROPELLERUNTERSETZUNGSGETRIEBES

METHOD FOR MANUFACTURING A PROPELLER REDUCTION GEAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.01.2015 FR 1550246**

(43) Date de publication de la demande:
**22.11.2017 Bulletin 2017/47**

(73) Titulaire: **Safran Transmission Systems**
**92700 Colombes (FR)**

(72) Inventeurs:
• **MATHIEU, Antoine**
**92400 Courbevoie (FR)**
• **FERAUD, Benjamin**
**92500 Rueil Malmaison (FR)**

(74) Mandataire: **Cabinet Camus Lebkiri**
**25 rue de Maubeuge**
**75009 Paris (FR)**

(56) Documents cités:
WO-A1-95/32895     WO-A1-2004/033937
WO-A2-00/17540

## Description

## DOMAINE TECHNIQUE

La présente invention concerne un procédé de fabrication d'un réducteur d'hélice et un réducteur d'hélice obtenu par ce procédé.

## ETAT DE LA TECHNIQUE ANTERIEUR

Les turbomachines à hélice de l'art antérieur comportent généralement une boite d'entraînement d'hélice, également appelée PGB ou « propeller gearbox » ou « réducteur d'hélice », qui permet de transmettre un mouvement de rotation d'un arbre moteur, généralement entraîné par une turbine à gaz, à une hélice, avec un rapport de réduction choisi. Un tel réducteur d'hélice permet d'entraîner en rotation l'hélice avec une vitesse inférieure à la vitesse de rotation de l'arbre moteur. Un tel réducteur d'hélice est par exemple décrit dans le document WO00/17540.

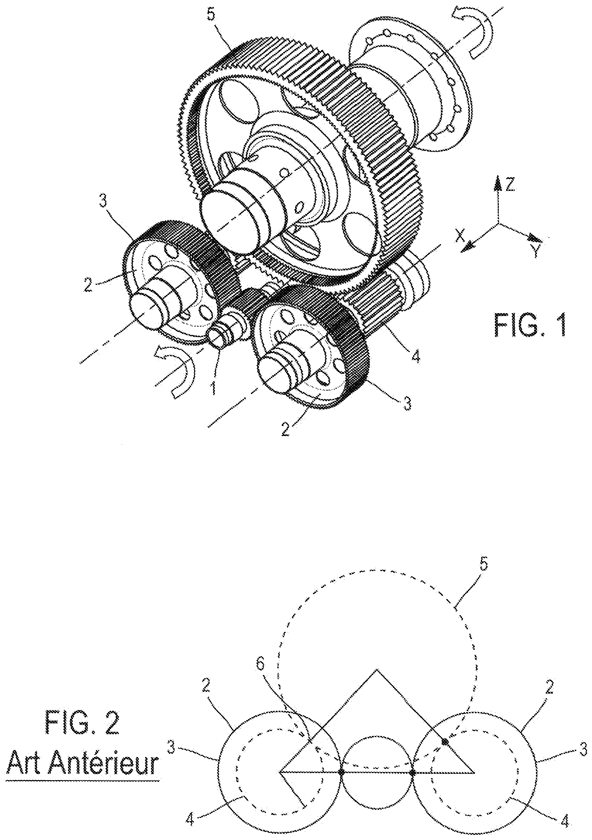

Parmi les différents réducteurs d'hélice pouvant être utilisés, l'art antérieur connait des réducteurs de type « compound ». Un tel réducteur est également appelé réducteur à lignes intermédiaires de transmission. Un tel réducteur est représenté sur la figure 1. Il comporte généralement :

- un pignon d'entrée 1 ;
- deux pignons intermédiaires 2, chaque pignon intermédiaire comportant un premier étage 3 engrenant avec le pignon d'entrée 1 et un deuxième étage 4;
- une roue de sortie 5 engrenant avec le deuxième étage 4 de chacun des pignons intermédiaires.

Le pignon d'entrée est destiné à être relié à un arbre moteur. La roue de sortie est destinée à être reliée à l'hélice à entraîner en rotation.

Toutefois, comme représenté sur la figure 2, un tel réducteur d'hélice est hyperstatique. Par conséquent, un jeu 6 au niveau de un des pignons intermédiaire 2 peut entraîner une mauvaise répartition des charges de sorte que l'autre pignon intermédiaire passe alors la majorité de la puissance moteur tandis que le premier pignon intermédiaire ne passe quasiment pas de puissance. Or, lorsque le réducteur transmet le couple maximum pour lequel il est dimensionné, cette mauvaise répartition du couple transmis par les deux pignons intermédiaires peut entraîner un endommagement du réducteur d'hélice et une usure prématurée dudit réducteur.

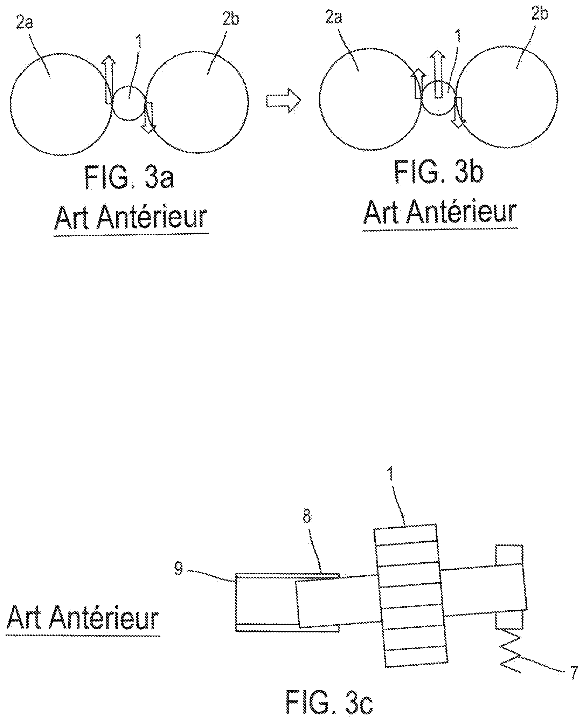

Pour remédier à ce problème l'art antérieur a proposé un réducteur d'hélice pourvu d'un système à ressort comme représenté sur les figures 3a, 3b et 4. Ce système à ressort 7 comporte un ressort 7 fixé au pignon d'entrée 1. Le système à ressort 7 comporte également une cannelure rotulante au niveau de l'axe du pignon d'entrée et une quille 9 soutenue par des roulements. Le système à ressort ajoute un degré de liberté en permettant au pignon d'entrée 1 de se déplacer verticalement de façon à ce que les deux pignons intermédiaires transmettent la même puissance. En effet, le système à ressort est dimensionné de façon à ce que le pignon d'entrée trouve sa position d'équilibre lorsque les efforts tangentiels exercés de part et d'autre du pignon d'entrée, et donc les couples transmis par les deux pignons intermédiaires 2, sont égaux. Ainsi, par exemple, lorsque le couple transmis par le pignon intermédiaire 2a est plus important que le couple transmis par le pignon intermédiaire 2b, le pignon d'entrée va se déplacer vers le haut, comme représenté sur les figures 2a et 2b, de façon à égaliser le couple transmis par les deux pignons intermédiaires.

Ce système à ressort est efficace, mais il force les dentures du réducteur d'hélice à travailler de manière non alignées, ce qui les endommage sur le long terme. En outre, le fait d'introduire un ressort dans le réducteur d'hélice est préjudiciable au comportement dynamique et à la fiabilité dudit réducteur d'hélice.

Les systèmes de répartition des charges dynamiques dans les réducteurs à hélice de l'art antérieur sont donc efficaces, mais ils ont un impact négatif en termes d'encombrement, de masse et de complexité des réducteurs à hélice.

## EXPOSE DE L'INVENTION

L'invention vise à remédier aux inconvénients de l'état de la technique en proposant une solution permettant une bonne répartition du couple transmis par les pignons intermédiaires d'un réducteur d'hélice, qui n'alourdisse pas le réducteur d'hélice, qui ne soit pas encombrant et pas compliqué.

Pour ce faire, est proposé selon un premier aspect de l'invention, un procédé de fabrication d'un réducteur d'hélice comportant :

- un carter comportant au moins deux portées de palier avant et deux portées de palier arrière;
- un pignon d'entrée ;
- au moins deux pignons intermédiaires, chaque pignon intermédiaire comportant un premier étage engrenant avec le pignon d'entrée et un deuxième étage, chaque pignon intermédiaire étant fixé au carter par l'intermédiaire d'au moins un palier avant et un palier arrière, chaque palier avant étant supporté par une des portées de palier avant, chaque palier arrière étant supporté par une des portées de palier arrière;
- une roue de sortie engrenant avec le deuxième étage de chacun des pignons intermédiaires ;

le procédé étant caractérisé en ce qu'il comporte les étapes suivantes :

- a) Mesure de défauts de fabrication du carter;
- b) Calcul d'un premier jeu angulaire induit au niveau de chaque pignon intermédiaire à partir des défauts de fabrication mesurés ;

- c) Estimation d'un deuxième jeu angulaire induit au niveau de chaque pignon intermédiaire par des déformations du carter lors de la transmission d'un couple seuil par le réducteur ;
- d) Calcul d'un jeu angulaire total à partir du premier jeu angulaire et du deuxième jeu angulaire ;
- e) Choix de deux pignons intermédiaires présentant une différence de phasage compensant ce jeu angulaire total.

Dans ce document, le terme « différence de phasage » désigne l'angle relatif entre une denture du premier étage et une denture du deuxième étage sur chaque pignon intermédiaire.

Dans ce document, le terme « jeu angulaire » désigne un débattement angulaire possible sur un pignon intermédiaire lorsque l'autre pignon intermédiaire est en contact à la fois avec le pignon d'entrée et la roue de sortie. Le jeu angulaire peut être mesuré en mettant en contact les dentures d'un côté du réducteur et en mesurant le débattement angulaire possible de l'autre côté du réducteur.

Le procédé de fabrication permet donc de réaliser un réducteur d'hélice dans lequel le couple transmis par les deux pignons intermédiaires est équilibré, tout en se passant des systèmes de répartition des charges utilisés dans l'art antérieur. Pour ce faire, le procédé propose d'utiliser un appairage des pignons intermédiaires de façon à améliorer la répartition des charges entre ces deux pignons. Ainsi, au lieu d'utiliser des systèmes de répartition des charges dynamiques comme dans l'art antérieur, afin d'équilibrer les charges entre les pignons intermédiaires sur toute la plage d'utilisation du réducteur, le procédé propose de choisir les pignons intermédiaires de façon à compenser les défauts de fabrication du carter et sa déformation lorsque le réducteur transmet un couple seuil. Ce couple seuil est de préférence le couple maximum pour lequel le réducteur a été dimensionné. On obtient ainsi un réducteur dans lequel le couple transmis est équitablement réparti entre les deux pignons intermédiaires lorsque le réducteur transmet un couple maximum, ce qui limite le risque d'endommagement et d'usure du réducteur, sans pour autant alourdir ou complexifier le réducteur. En outre, on se passe ainsi des systèmes d'équilibrage des charges de l'art antérieur pourvus de pièces mobiles, qui menaçaient la fiabilité du réducteur.

Le procédé selon le premier aspect de l'invention peut également présenter une ou plusieurs des caractéristiques ci-après prises indépendamment ou selon toutes les combinaisons techniquement possibles.

Avantageusement, l'étape (a) de mesure de défauts comporte une étape de mesure d'une position réelle de chaque portée de palier.

Avantageusement, l'étape (b) de calcul du premier jeu angulaire comporte les étapes suivantes :

- pour chaque portée de palier, calcul d'une différence entre la position réelle de la portée de palier et une position de référence de façon à obtenir un décalage de portée de palier;
- pour chaque pignon intermédiaire :

  ◦ calcul d'un décalage du pignon intermédiaire à partir des décalages des portées de paliers supportant les paliers de ce pignon intermédiaire;

  ◦ calcul du premier jeu angulaire à partir du décalage du pignon intermédiaire.

Avantageusement, l'étape (c) d'estimation du deuxième jeu angulaire comporte les étapes suivantes :

- estimation d'un déplacement de chaque portée de palier lors de la transmission d'un couple seuil par le réducteur ;
- pour chaque pignon intermédiaire :

  ◦ calcul d'un déplacement du premier étage à partir des déplacements des portées de paliers supportant les paliers de ce pignon intermédiaire;

  ◦ calcul du deuxième jeu angulaire à partir des déplacements calculés.

Un deuxième aspect de l'invention concerne un réducteur d'hélice obtenu par le procédé selon le premier aspect de l'invention.

## BREVES DESCRIPTION DES FIGURES

D'autres caractéristiques et avantages de l'invention ressortiront à la lecture de la description détaillée qui suit, en référence aux figures annexées, qui illustrent :

- La figure 1, une vue en perspective d'un réducteur d'hélice auquel s'applique le procédé selon le premier aspect de l'invention ;
- La figure 2, une vue de face d'un réducteur d'hélice fabriqué selon un procédé de fabrication de l'art antérieur ;
- Les figures 3a, 3b et 4, des représentations schématiques d'un réducteur d'hélice de l'art antérieur pourvu d'un système de répartition des charges à ressort ;

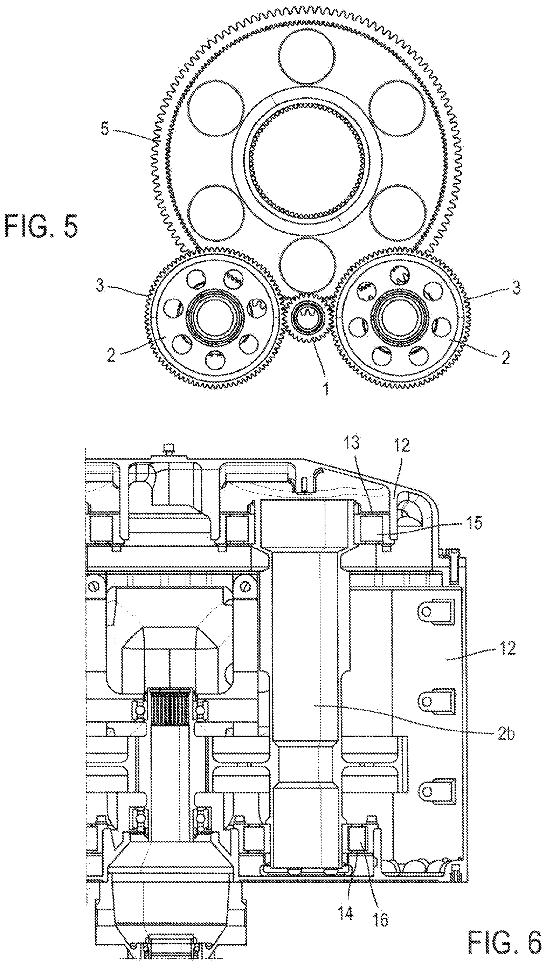

- La figure 5, une vue de la face d'un réducteur d'hélice selon un mode de réalisation de l'invention ;
- La figure 6, une vue de dessus d'une partie d'un réducteur d'hélice selon un mode de réalisation de l'invention ;
- La figure 7, une vue de face du carter du réducteur d'hélice de la figure 6 ;

- La figure 8, une vue agrandie d'une partie du carter de la figure 7 ;
- La figure 9, une représentation schématique de la méthode permettant de calculer le décalage d'engrènement ;
- Les figures 10a à 10c, des représentations schématiques de la denture d'un pignon intermédiaire utilisé dans le cadre d'un procédé selon un mode de réalisation de l'invention ;
- La figure 11, un champ de déplacement des portées de palier du carter de la figure 7 dans le cas d'un chargement au couple seuil;
- La figure 12, un champ de déplacement d'un pignon intermédiaire du réducteur d'hélice de la figure 5 ;
- La figure 13, une vue du premier étage du réducteur d'hélice de la figure 5 ;
- La figure 14, une vue du deuxième étage du réducteur d'hélice de la figure 5 ;
- La figure 15, une vue d'une dent d'un pignon intermédiaire engrenant avec une dent de la roue du réducteur d'hélice de la figure 5 ;
- Les figures 16a, une représentation schématique du couple transmis par chacun des pignons intermédiaire d'un réducteur d'hélice en l'absence d'utilisation d'un procédé selon l'invention ;
- La figure 16b, une représentation schématique du couple transmis par chacun des pignons intermédiaire d'un réducteur d'hélice fabriqué par un procédé selon un mode de réalisation de l'invention.

Pour plus de clarté, les éléments identiques ou similaires sont repérés par des signes de références identiques sur l'ensemble des figures.

## DESCRIPTION DETAILLEE D'AU MOINS UN MODE DE REALISATION

Le procédé vise à fabriquer un réducteur d'hélice tel que représenté sur les figures. Ce réducteur d'hélice comporte un carter 12. Le carter 12 comporte deux portées de palier avant 13 et deux portées de palier arrière 14. Le carter 12 entoure une chaine d'engrenages permettant d'entraîner en rotation une hélice à une vitesse différente de la vitesse de rotation d'un arbre moteur. Pour ce faire, la chaîne d'engrenages comporte un pignon d'entrée 1 destiné à être fixé à un arbre moteur et une roue de sortie 5 destinée à être solidaire d'une hélice à entraîner en rotation. La chaîne d'engrenage comporte également au moins deux pignons intermédiaires 2. Chaque pignon intermédiaire 2 comporte un premier étage 3 qui engrène avec le pignon d'entrée 1 et un deuxième étage 4 qui engrène avec la roue de sortie 5. Chaque pignon intermédiaire est fixé au carter par l'intermédiaire :

- d'un palier avant 15 supporté par une des portées de palier avant 13 du carter et
- d'un palier arrière 16 supportée par une des portées de palier arrière 14 du carter.

Un procédé de fabrication d'un tel réducteur va maintenant être décrit. Il comporte tout d'abord une étape (a) de mesure de défauts de fabrication du carter. Plus précisément, au cours de cette étape, on mesure la position réelle de chaque portée de palier.

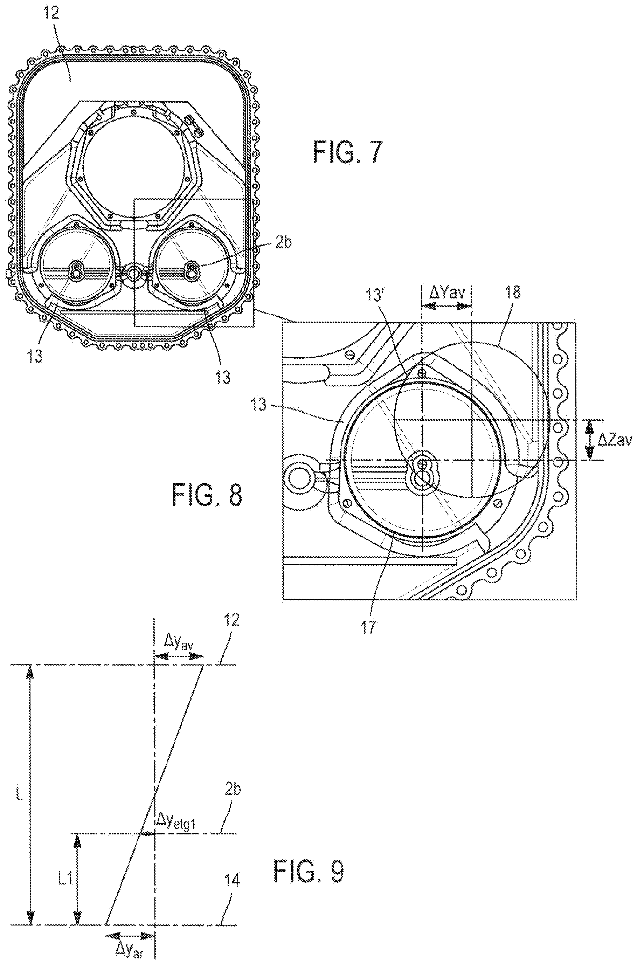

Le procédé comporte ensuite une étape de comparaison entre la position réelle de chaque portée de palier et une position de référence. Ainsi, en référence aux figures 7 et 8, le procédé comporte une étape de mesure de la différence entre une position de référence 17 spécifiée par les plans et la position réelle 18 de chaque portée de palier. On obtient ainsi un décalage de portée de palier ($\Delta$Yav, $\Delta$Zav) pour chaque portée de palier avant et ($\Delta$Yar, $\Delta$Zar) pour chaque portée de palier arrière.

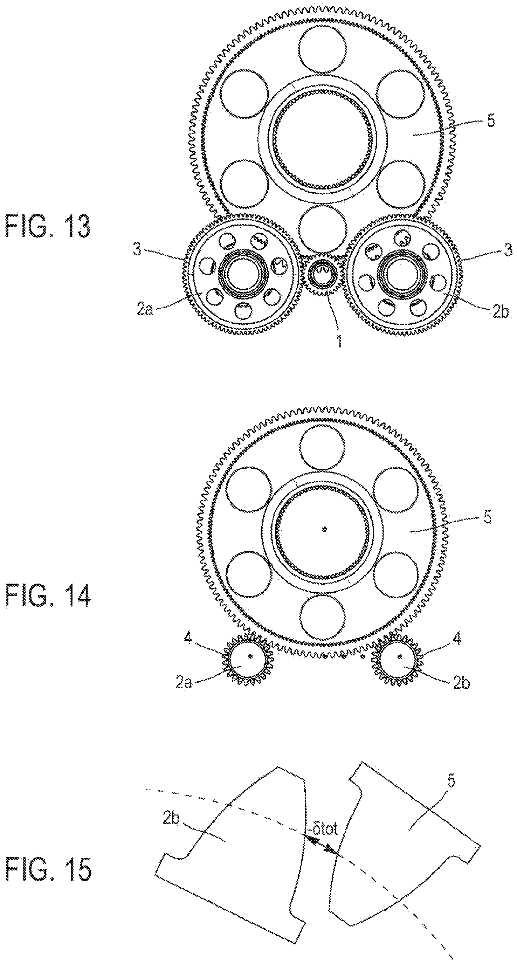

Le procédé comporte ensuite une étape (b) de calcul d'un premier jeu angulaire induit au niveau de chaque pignon intermédiaire à partir des défauts de fabrication mesurés. Cette étape comporte une étape de calcul d'un décalage du premier étage de chaque pignon intermédiaire à partir des décalages des portées de palier calculées. Ainsi, le pignon intermédiaire 2b par exemple est fixé au carter via la portée de palier avant 13 et via la portée de palier arrière 14. En référence à la figure 13, connaissant le décalage de la portée de palier avant 13 ($\Delta$Yav, $\Delta$Zav), le décalage de la portée de palier arrière 14 ($\Delta$Yar, $\Delta$Zar), la longueur total du pignon intermédiaire L, et la distance entre le pignon intermédiaire et une des portées de palier L1, on calcule le décalage ($\Delta$Y, $\Delta$Z) du premier étage du pignon intermédiaire 2b :

$$\Delta Y = \frac{\Delta \mathrm{Yar} * (\mathrm{L} - \mathrm{L}1) + \mathrm{L}1 * \Delta \mathrm{Yav}}{L}$$

$$\Delta Z = \frac{\Delta \mathrm{Zar} * (\mathrm{L} - \mathrm{L}1) + \mathrm{L}1 * \Delta \mathrm{Zav}}{L}$$

Le procédé comporte ensuite une étape de calcul du premier jeu angulaire à partir du décalage ($\Delta$Y, $\Delta$Z) du premier étage du pignon intermédiaire 2b. Ce premier jeu angulaire est donné par les équations suivantes :

$$\delta 1 = \Delta Z / r + \Delta Y * \tan(\alpha) / r$$

Où r est le rayon primitif du pignon intermédiaire en mm

Le premier jeu angulaire $\delta 2$, est calculé de la même façon pour l'autre pignon intermédiaire 2a.

Le procédé comporte ensuite une étape de calcul du premier jeu angulaire total $\delta$fabrication= $\delta 1$ + $\delta 2$

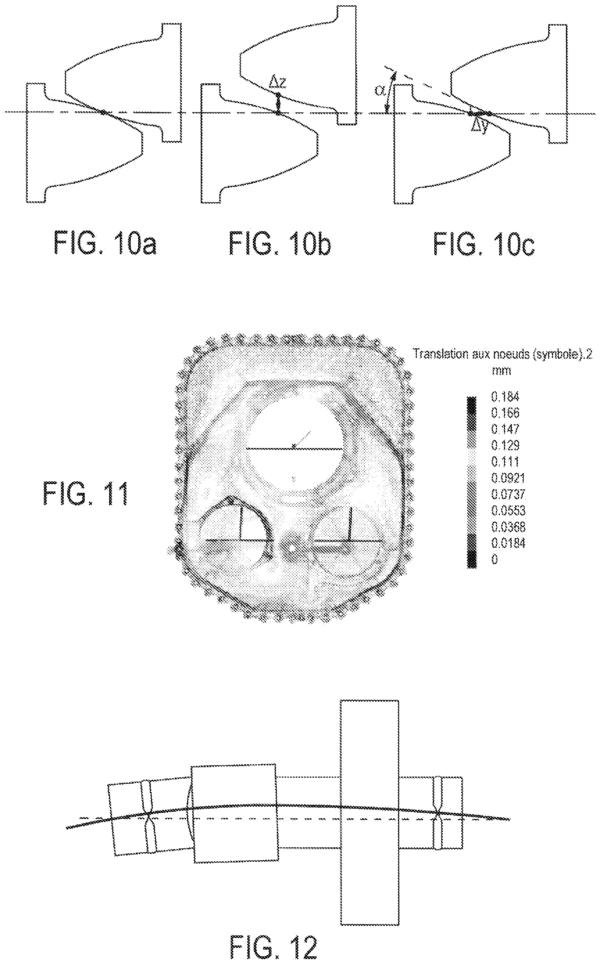

Le procédé comporte également une étape d'estimation d'un deuxième jeu angulaire induit au niveau de chaque pignon intermédiaire par des déformations du carter lors de la transmission d'un couple seuil par le réducteur. Pour cela, en référence aux figures 11 et 12, on peut par exemple effectuer un calcul par éléments finis pour connaitre le déplacement de chaque portée de palier dû aux déformations du carter lors de la transmission d'un couple seuil par le réducteur. Ce couple seuil est de préférence le couple maximum pour lequel le réducteur a été dimensionné. On obtient donc ainsi les déplacements ($\Delta Y'av$, $\Delta Z'av$) des portées de palier avant et les déplacements ($\Delta Y'ar$, $\Delta Z'ar$) des portées de palier arrière.

Le procédé comporte ensuite une étape de calcul du déplacement ($\Delta Y'$, $\Delta Z'$) du premier étage du pignon intermédiaire 2b en cas de transmission du couple seuil :

$$\Delta Y' = \frac{\Delta Y'ar * (L - L1) + L1 * \Delta Y'av}{L}$$

$$\Delta Z' = \frac{\Delta Z'ar * (L - L1) + L1 * \Delta Z'av}{L}$$

Le procédé comporte ensuite une étape de calcul du deuxième jeu angulaire à partir du décalage ($\Delta Y'$, $\Delta Z'$) du premier étage du pignon intermédiaire 2b. Ce deuxième jeu angulaire est donné par les équations suivantes :

$$\delta 1' = \Delta Z'/r + \Delta Y'*\tan(\alpha)/r$$

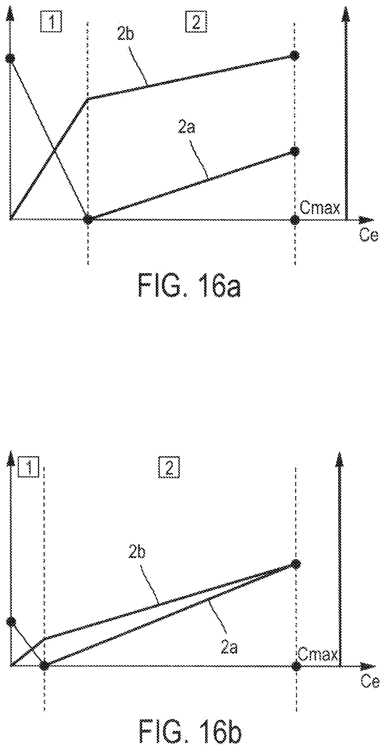

Où r est le rayon primitif du pignon intermédiaire en mm
Le deuxième jeu angulaire $\delta 2'$ est calculé de la même façon pour l'autre pignon intermédiaire 2a.
Le procédé comporte ensuite une étape de calcul du deuxième jeu angulaire total $\delta$déformation= $\delta 1$ '+ $\delta 2'$
Le procédé comporte ensuite une étape de calcul d'un jeu angulaire total : $\delta$total=$\delta$fabrication+$\delta$déformation
Le procédé comporte ensuite une étape de choix d'un couple de pignons intermédiaires entraînant un déphasage égal à - $\delta$total comme représenté sur la figure 15.
Le procédé décrit permet donc de compenser les défauts de fabrication et de déformation en choisissant un couple de pignons intermédiaires approprié. Il permet donc d'obtenir une répartition des charges équilibrée entre les deux pignons intermédiaires. Ainsi, la figure 16a représente l'évolution du couple transmis par chacun des pignons intermédiaires 2a et 2b en fonction du couple Ce en entrée du réducteur lorsque le réducteur n'est pas fabriqué par un procédé selon l'invention. Comme on peut le voir sur cette figure, les deux pignons intermédiaires transmettent des couples très différents. La figure 16b représente l'évolution du couple transmis par chacun des pignons intermédiaires 2a et 2b en fonction du couple Ce en entrée du réducteur lorsque le réducteur a été fabriqué par un procédé selon un mode de réalisation de l'invention. Comme on peut le voir sur cette figure, le couple transmis est alors équitablement réparti entre les deux pignons intermédiaires.
Naturellement l'invention n'est pas limitée aux modes de réalisation décrits en référence aux figures et des variantes pourraient être envisagées sans sortir du cadre de l'invention. On pourrait notamment appliquer le procédé pour fabriquer des réducteurs d'hélice comportant plus de deux pignons intermédiaires.

**Revendications**

1. Procédé de fabrication d'un réducteur d'hélice comportant :

    - un carter (12) comportant au moins deux portées de palier avant (13) et deux portées de palier arrière (14);
    - un pignon d'entrée (1);
    - au moins deux pignons intermédiaires (2, 2a, 2b), chaque pignon intermédiaire (2, 2a, 2b) comportant un premier étage (3) engrenant avec le pignon d'entrée (1) et un deuxième étage (4), chaque pignon intermédiaire (2, 2a, 2b) étant fixé au carter (12) par l'intermédiaire d'au moins un palier avant (15) et un palier arrière (16), chaque palier avant (15) étant supporté par une des portées de palier avant (13), chaque palier arrière (16) étant supporté par une des portées de palier arrière (14);
    - une roue de sortie (5) engrenant avec le deuxième étage (4) de chacun des pignons intermédiaires ;

    le procédé étant **caractérisé en ce qu'**il comporte les étapes suivantes :

    - (a) Mesure de défauts de fabrication du carter ($\Delta$Yav, $\Delta$Zav, $\Delta$Yar, $\Delta$Zar) ;
    - (b) Calcul d'un premier jeu angulaire ($\delta$fabrication) induit au niveau de chaque pignon intermédiaire (2a, 2b) à partir des défauts de fabrication mesurés ($\Delta$Yav, $\Delta$Zav, $\Delta$Yar, $\Delta$Zar);
    - (c) Estimation d'un deuxième jeu angulaire ($\delta$déformation) induit au niveau de chaque pignon intermédiaire (2a, 2b) par des déformations du carter (12) lors de la transmission d'un couple seuil par le réducteur ;
    - (d) Calcul d'un jeu angulaire total ($\delta$total) à partir du premier jeu angulaire et du deuxième jeu angulaire ;
    - (e) Choix de deux pignons intermédiaires présentant une différence de phasage (-$\delta$total) compensant ce jeu angulaire total.

**2.** Procédé selon la revendication précédente, dans lequel l'étape (a) de mesure de défauts comporte une étape de mesure d'une position réelle (18) de chaque portée de palier (13, 14).

**3.** Procédé selon la revendication précédente, dans lequel l'étape (b) de calcul du premier jeu angulaire comporte les étapes suivantes :

- pour chaque portée de palier (13, 14), calcul d'une différence entre la position réelle (18) de la portée de palier et une position de référence (17) de façon à obtenir un décalage de portée de palier ($\Delta$Yav, $\Delta$Zav, $\Delta$Yar, $\Delta$Zar);
- pour chaque pignon intermédiaire (2a, 2b):

  ∘ calcul d'un décalage ($\Delta$Y, $\Delta$Z) du pignon intermédiaire à partir des décalages des portées de paliers ($\Delta$Yav, $\Delta$Zav, $\Delta$Yar, $\Delta$Zar) supportant les paliers de ce pignon intermédiaire ;
  ∘ calcul du premier jeu angulaire ($\delta$fabrication) à partir du décalage ($\Delta$Y, $\Delta$Z) du pignon intermédiaire.

**4.** Procédé selon l'une des revendications précédentes, dans lequel l'étape (c) d'estimation du deuxième jeu angulaire comporte les étapes suivantes :

- estimation d'un déplacement ($\Delta$Y'av, $\Delta$Z'av, $\Delta$Y'ar, $\Delta$Z'ar) de chaque portée de palier (13, 14) lors de la transmission d'un couple seuil par le réducteur ;
- pour chaque pignon intermédiaire (2a, 2b):

  ∘ calcul d'un déplacement ($\Delta$Y', $\Delta$Z') du premier étage à partir des déplacements ($\Delta$Y'av, $\Delta$Z'av, $\Delta$Y'ar, $\Delta$Z'ar) des portées de paliers supportant les paliers de ce pignon intermédiaire;
  ∘ calcul du deuxième jeu angulaire ($\delta$déformation) à partir des déplacements calculés.
  ∘

**5.** Réducteur d'hélice fabriqué par un procédé selon l'une des revendications précédentes.

**Patentansprüche**

**1.** Verfahren zur Herstellung eines Propelleruntersetzungsgetriebes, aufweisend:

- ein Gehäuse (12), aufweisend mindestens zwei vordere Lagersitze (13) und zwei hintere Lagersitze (14);
- ein Eingangszahnrad (1);
- mindestens zwei Übergangszahnräder (2, 2a, 2b), wobei jedes Übergangszahnrad (2, 2a, 2b) eine erste Stufe (3), die in das Eingangszahnrad (1) eingreift, und eine zweite Stufe (4) aufweist, wobei jedes Übergangszahnrad (2, 2a, 2b) an dem Gehäuse (12) mit Hilfe von mindestens einem vorderen Lager (15) und einem hinteren Lager (16) befestigt ist, wobei jedes vordere Lager (15) von einem der vorderen Lagersitze (13) getragen wird, wobei jedes hintere Lager (16) von einem der hinteren Lagersitze (14) getragen wird;
- ein Ausgangsrad (5), das in die zweite Stufe (4) jedes der Übergangszahnräder eingreift;

wobei das Verfahren **dadurch gekennzeichnet ist, dass** es die folgenden Schritte aufweist:

- (a) Messen von Herstellungsfehlern des Gehäuses ($\Delta$Yav, $\Delta$Zav, $\Delta$Yar, $\Delta$Zar) ;
- (b) Berechnen eines ersten Winkelspiels ($\delta$Herstellung), induziert im Bereich jedes Übergangszahnrads (2a, 2b) auf der Basis der gemessenen Herstellungsfehler ($\Delta$Yav, $\Delta$Zav, $\Delta$Yar, $\Delta$Zar);
- (c) Schätzen eines zweiten Winkelspiels ($\delta$Verformung), induziert im Bereich jedes Übergangszahnrads (2a, 2b) durch Verformungen des Gehäuses (12) bei der Übertragung eines Grenzmoments durch das Untersetzungsgetriebe;
- (d) Berechnen eines Winkelspiels insgesamt ($\delta$insgesamt) auf der Basis des ersten Winkelspiels und des zweiten Winkelspiels;
- (e) Auswählen von zwei Übergangszahnrädern, die eine Phasendifferenz (-$\delta$insgesamt) aufweisen, welche dieses Winkelspiel insgesamt ausgleicht.

**2.** Verfahren nach vorangehendem Anspruch, wobei der Schritt (a) des Messens von Fehlern einen Schritt des Messens einer tatsächlichen Position (18) jedes Lagersitzes (13, 14) aufweist.

**3.** Verfahren nach vorangehendem Anspruch, wobei der Schritt (b) des Berechnens des ersten Winkelspiels die folgenden Schritte aufweist:

- für jeden Lagersitz (13, 14), Berechnen einer Differenz zwischen der tatsächlichen Position (18) des Lagersitzes und einer Referenzposition (17) derart, dass man einen Lagersitzversatz ($\Delta$Yav, $\Delta$Zav, $\Delta$Yar, $\Delta$Zar) erhält;
- für jedes Übergangszahnrad (2a, 2b):

  ∘ Berechnen eines Versatzes ($\Delta$Y, $\Delta$Z) des Übergangszahnrads auf der Basis der Versatze der Lagersitze ($\Delta$Yav, $\Delta$Zav, $\Delta$Yar, $\Delta$Zar), welche die Lager dieses Übergangszahnrads tragen;

◦ Berechnen des ersten Winkelspiels (δHerstellung) auf der Basis des Versatzes (ΔY, ΔZ) des Übergangszahnrads.

**4.** Verfahren nach einem der vorangehenden Ansprüche, wobei der Schritt (c) des Schätzens des zweiten Winkelspiels die folgenden Schritte aufweist:

- Schätzen einer Verlagerung (ΔY'av, ΔZ'av, ΔY'ar, ΔZ'ar) jedes Lagersitzes (13, 14) bei der Übertragung eines Grenzmoments durch das Untersetzungsgetriebe;
- für jedes Übergangszahnrad (2a, 2b):

◦ Berechnen einer Verlagerung (ΔY', ΔZ') der ersten Stufe auf der Basis der Verlagerungen (ΔY'av, ΔZ'av, ΔY'ar, ΔZ'ar) der Lagersitze, welche die Lager dieses Übergangszahnrads tragen;
◦ Berechnen des zweiten Winkelspiels (δVerformung) auf der Basis der berechneten Verlagerungen.

**5.** Propelleruntersetzungsgetriebe, hergestellt nach einem Verfahren nach einem der vorangehenden Ansprüche.

**Claims**

**1.** A method for manufacturing a propeller reduction gear including:

- a casing (12) including at least two front bearing seatings (13) and two rear bearing seatings (14);
- an input gear (1);
- at least two intermediate gears (2, 2a, 2b), each intermediate gear (2, 2a, 2b) including a first stage (3) meshing with the input gear (1) and a second stage (4), each intermediate gear (2, 2a, 2b) being attached to the casing (12) via at least one front bearing (15) and one rear bearing (16), each front bearing (15) being supported by one of the front bearing seatings (13), each rear bearing (16) being supported by one of the rear bearing seatings (14);
- an output gear wheel (5) meshing with the second stage (4) of each of the intermediate gears;

wherein, the method comprises the following steps of:

- (a) measuring manufacturing defects of the casing (ΔYav, ΔZav, ΔYar, ΔZar) ;
- (b) calculating a first angular play (δmanufacturing) induced at each intermediate gear (2a, 2b) from the measured manufacturing defects (ΔYav, ΔZav, ΔYar, ΔZar);
- (c) estimating a second angular play (δdeformation) induced at each intermediate gear (2a, 2b) by deformations of the casing (12) upon transmitting a threshold torque by the reduction gear;
- (d) calculating a total angular play (δtotal) from the first angular play and the second angular play;
- (e) selecting two intermediate gears having a phasing difference (-δtotal) compensating for this total angular play.

**2.** The method according to the preceding claim, wherein step (a) of measuring defects includes a step of measuring a real position (18) of each bearing seating (13, 14).

**3.** The method according to the preceding claim, wherein step (b) of calculating the first angular play includes the following steps of:

- for each bearing seating (13, 14), calculating a difference between the real position (18) of the bearing seating and a reference position (17) so as to obtain a bearing seating offset (ΔYav, ΔZav, ΔYar, ΔZar);
- for each intermediate gear (2a, 2b):

◦ calculating an offset (ΔY, ΔZ) of the intermediate gear from the bearing seating offsets (ΔYav, ΔZav, ΔYar, ΔZar) supporting the bearings of this intermediate gear;
◦ calculating the first angular play (δmanufacturing) from the offset (ΔY, ΔZ) of the intermediate gear.

**4.** The method according to one of the preceding claims, wherein step (c) of estimating the second angular play includes the following steps of:

- estimating a displacement (ΔY'av, ΔZ'av, ΔY'ar, ΔZ'ar) of each bearing seating (13, 14) upon transmitting a threshold torque by the reduction gear;
- for each intermediate gear (2a, 2b):

◦ calculating a displacement (ΔY', ΔZ') of the first stage from the displacements (ΔY'av, ΔZ'av, ΔY'ar, ΔZ'ar) of the bearing seatings supporting the bearings of this intermediate gear;
◦ calculating a second angular play (δdeformation) from the calculated displacements.

**5.** A propeller reduction gear manufactured by a method according to one of the preceding claims.

FIG. 1

FIG. 2
Art Antérieur

FIG. 3a
Art Antérieur

FIG. 3b
Art Antérieur

Art Antérieur

FIG. 3c

FIG. 5

FIG. 6

FIG. 7

FIG. 8

FIG. 9

FIG. 10a     FIG. 10b     FIG. 10c

FIG. 11

Translation aux noeuds (symbole).2
mm

0.184
0.166
0.147
0.129
0.111
0.0921
0.0737
0.0553
0.0368
0.0184
0

FIG. 12

FIG. 13

FIG. 14

FIG. 15

FIG. 16a

FIG. 16b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

*   WO 0017540 A